# EUROPEAN PATENT SPECIFICATION

(11) **EP 3 548 330 B1**
(45) Date of publication and mention of the grant of the patent: **21.07.2021**
(21) Application number: 17917860.3
(22) Date of filing: 29.11.2017
(51) Int. Cl.: B60N 2/39, B60N 2/50, G01C 19/00, G05D 1/08

(54) **A GYROSCOPIC VEHICLE SEAT STRUCTURE**
GYROSKOPISCHE FAHRZEUGSITZSTRUKTUR
STRUCTURE DE SIÈGE DE VÉHICULE GYROSCOPIQUE

(30) Priority: 30.11.2016 TR 201617546
(43) Date of publication of application: 09.10.2019
(73) Proprietor: Ford Otomotiv Sanayi A.S., 34885 Sancaktepe/Istanbul (TR)
(72) Inventor: ÇIÇEK, Orhan, Istanbul (TR); SENDUR, Polat, Istanbul (TR); ÇAKMAK, Aras, Istanbul (TR); NAYIR, Tanju, Istanbul (TR); YARPUZLU, Berkay, Istanbul (TR)
(74) Representative: Dericioglu, E. Korhan
(86) International application number: PCT/TR2017/050609
(87) International publication number: WO 2019/013726

(56) References cited:
- CN-A- 1 305 091
- CN-A- 102 336 155
- CN-U- 204 936 885
- DE-A1- 4 115 639
- DE-A1- 4 115 639
- JP-A- H08 197 990
- JP-A- H08 197 990

## Description

### Field of the Invention

The present invention relates to a gyroscopic vehicle seat structure which is created by integrating a gyroscope application to vehicle seat, and which prevents the driver/passenger sitting on the seat from being affected by vibrations from the road, rolling and pitching movements upon the operation of the gyroscope.

### Background of the Invention

The vehicle seats known in the state of the art either cause the vibrations occurring due to roughness on the road on which the vehicle is driven to be transferred/felt to the passenger directly or absorption is provided until a certain level in a conventional dampener is used on the seat. On the other hand, the current seat systems have difficulty especially in dampening the rolling movement, and the vibrations in other directions are directly spread to the passenger, thereby causing back pain and decreasing driving comfort.

Currently, pneumatic or spring systems are used as solution for dampening this vibration in the vehicle seats. However these systems can prevent vibration only in certain levels. By means of using electromagnetic motor known in the state of the art, alternative to these applications, especially horizontal and vertical oscillations are prevented significantly, however these systems are high-cost applications (approximately 6000$).

Chinese Utility Model No CN204355217, an application known in the state of the art, discloses a self-balancing electric vehicle with front and back wheels and a gyroscopic stabilizing system enabling thereof. The uniaxial gyro-stabilizing system which the inventive self-balancing electric vehicle has comprises three pairs of gyroscopes. These are comprised of a gyroscope base, a rotor motor, a rolling motor, rotor, rotor base, rotor cap/cover, fixed ball bearing, cylindrical ball bearing and a seal.

German Patent Document no DE4115639, an application known in the state of the art, discloses ambulance with position stabilized stretcher support platform that is continuously adjusted by motors responding to gyroscope coupled sensors to maintain horizontal position. The platform has a pair of electric motors placed inside a central unit. The commands for the motors' operation are based upon absolute angular measurements that are obtained by sensors responding to frame/chassis movements relative to a stable gyroscope.

Japanese Patent document no JPH0747876, an application known in the state of the art, discloses a device stabilizing the driver seat. If a centrifugal force is created during a sharp turn, it is detected by a sensor, and a drive sensor is transferred to an electric motor by a control member. If the vehicle is tilted by centrifugal force, the driver seat is tilted in the opposite direction by the same degree and it is kept horizontal relative to the ground.

Turkish Patent document no TR 2008/07879, an application known in the state of the art, discloses a vehicle with driver seat that can be adjusted according to incline. A vehicle, particularly an electric wheelchair, comprising a chassis and a driver's seat adjustable to the inclination of the chassis along a rail designed as two springs, is characterized by an inclination sensor for detecting the angle which the seating surface of the driver's seat has relative to the horizontal plane, a control device associated with the chassis and the driver's seat, and a control and adjustment mechanism that interacts with the inclination sensor and the control device and allows the driver's seat to be adjusted with the aid of a control device such that the seating surface is generally always parallel to the horizontal plane. Japanese Patent document JP H8 197990 A discloses a driver seat including a gyroscope damping device.

### Summary of the Invention

The objective of the present invention is to provide a gyroscopic vehicle seat structure which enables the passenger not to be affected from rolling and pitching movements coming from the road by means of a gyroscope application integrated under the vehicle seat, and increases driving comfort.

Another objective of the present invention is to provide a gyroscopic vehicle seat structure which enables to constantly maintain the stability of the vehicle seat placed thereon by balancing the gyroscope mass rotating with an electric motor.

A further objective of the present invention is to provide a gyroscopic vehicle seat structure which can be used as a normal vehicle seat by deactivating the gyroscope system in accordance with the user preference.

Yet another objective of the present invention is to provide a gyroscopic vehicle seat structure which can be activated upon detection of inclinations on the road on which the vehicle is moving by means of the sensors.

### Detailed Description of the Invention

"A gyroscopic vehicle seat structure" developed to fulfill the objective of the present invention is illustrated in the accompanying figures, in which:
Figure 1 is the lateral view of the vehicle seat structure in previous technique applications.
Figure 2 is the lateral view of the gyroscopic vehicle seat structure of the present invention

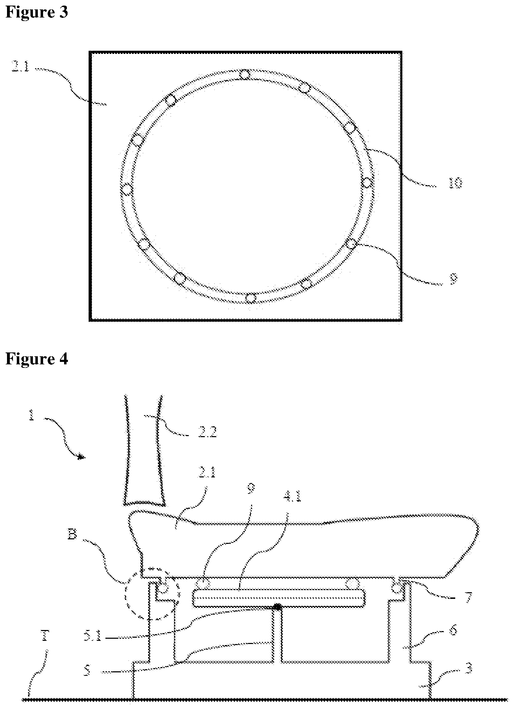

Figure 3 is the top view of gyroscope system (wherein the gyroscope mass is not in the basin).
Figure 4 is the lateral cross-sectional view of the inventive gyroscopic vehicle seat structure in straight road (wherein the gyroscope mass is not in the basin).
Figure 5 is the close view of (a) B part in Figure 4 in one embodiment, and (b) in a preferred embodiment.
Figure 6 is the lateral cross-sectional view of the inventive gyroscopic vehicle seat structure in straight road (wherein the gyroscope mass is in the basin).
Figure 7 is the partial cross-sectional view of the inner structure of the inventive gyroscope system.

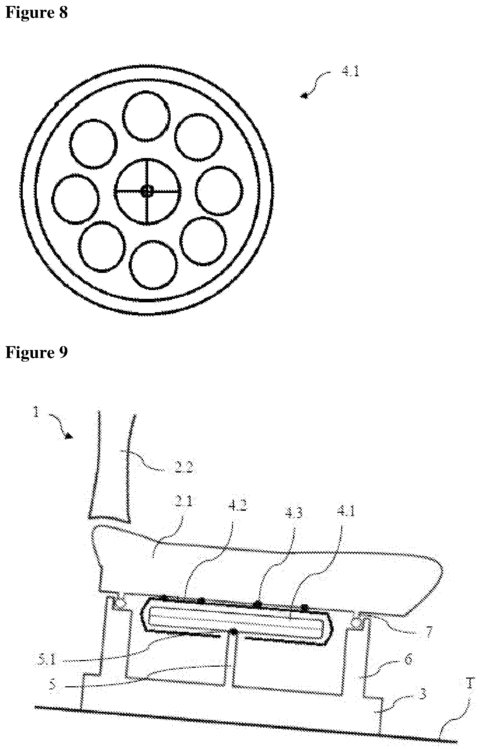

Figure 8 is the top view of the gyroscope mass.
Figure 9 is the lateral cross-sectional view of the inventive gyroscopic vehicle seat structure when it is not activated during downhill driving of the vehicle.

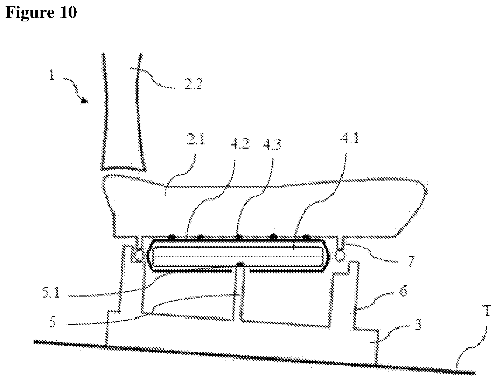

Figure 10 is the lateral cross-sectional view of the inventive gyroscopic vehicle seat structure when it is activated during downhill driving of the vehicle.

The components in the figures are numbered as follows:
1. Gyroscopic vehicle seat structure
2. Vehicle seat
   2.1. Seat part
   2.2. Back part
3. Seat lower frame
4. Gyroscope system
   4.1. Gyroscope mass
   4.2. Gyroscope slot
   4.3. Gyroscope connection point
5. Contact shaft
   5.1. Contact ball
6. Limiting frame
7. Limiting extension
8. Lock pin
9. Gyroscope wheel
10. Gyroscope rail channel
11. Gyroscope connecting terminal
   T. Vehicle floor
   OT. Previous Technique

The inventive gyroscopic vehicle seat structure (1), which prevents the driver/passenger sitting on the seat from being affected by vibrations from the road, rolling and pitching movements by integrating gyroscope application, comprises
- at least one vehicle seat (2) which is comprised of a seat part (2.1) on which the passenger/driver sits, and a back part (2.2) on which he leans his back,
- at least one seat lower frame (3) which is fixed to the vehicle floor (T) and disposed between the seat part (2.1) of the vehicle seat (2) and the vehicle floor (T) on which it is placed, which has a cross sectional area almost with the same width as the seat part (2.1) of the vehicle seat (2), and which is in form of a box having an inner volume accommodating mechanical components that provide the connection of the vehicle seat (2) to the vehicle floor (T) and pneumatic or spring systems depending on the seat type,
- at least one gyroscope system (4) which is situated between the seat part (2.1) of the vehicle seat (2) and the seat lower frame (3) and close to the seat part (2.1), and which comprises
   ∘ at least one gyroscope mass (4.1) which is manufactured from a heavy material (metal) in order to be used in gyroscope application, which is in form of a circular plate and which can rotate around an axis passing through the center of a circle upon the operation of a motor to which it is connected, and which is positioned parallel to the floor of the seat part (2.1),
   ∘ at least one gyroscope slot (4.2) in which the gyroscope mass (4.1) is positioned and which has an inner volume wherein it can rotate freely without contacting its walls,
   ∘ at least one gyroscope connection point (4.3) which enables the distance between them to be maintained and to keep the inclination of the seat part (2.1) same as the inclination of the gyroscope slot (4.2) by the gyroscope slot (4.2) contacting the seat part (2.1), and which has balls placed rotatable inside the holes on the surface of the gyroscope slot (4.2) corresponding to the seat part (2.1),
   and which enables to perform angular balancing with constant fast rotation of the gyroscope mass (4.1), and also enables the gyroscope mass (4.1) and the vehicle seat (2) it is associated with to remain in balance independent from the inclination of the road on which the vehicle is moving,
- at least one contact shaft (5) which is fixed to the inner volume of the seat lower frame (3) corresponding to the vehicle floor (T) from its one end, and which extends towards the point of where the rotational axis of the gyroscope mass (4.1) passes, and which has at least one contact ball (5.1) which can rotate freely and is located where it contacts the gyroscope mass (4.1) in order to keep the gyroscope mass (4.1) at a certain distance far from the vehicle floor (T) without preventing its rotation,
- at least one limiting frame (6) which is fixed to the floor of the seat lower frame (3) therein, and extends towards the seat part (2.1) from the vehicle floor (T) such that it will remain inside the gyroscope system (4), and the end of which close to the seat part (2.1) has a cross-section in form of L facing the hollow inner volume it forms,
- at least one limiting extension (7) which extends towards the limiting frame (6) from the seat part (2.1) of the vehicle seat (2), which is placed close to the L shaped end of the limiting frame (6) such that it will not contact, and which provides limiting by contacting the vertical and horizontal surfaces of the L shaped end of the limiting frame (6) during oscillation of vehicle seat (2) during stabilizing with the effect of gyroscope system (4).

In one embodiment of the invention, the gyroscope mass (4.1) is comprised of two or more separable circular plates in order to be adjusted to different weights according to requirements.

In a different embodiment of the invention, gyroscope slot (4.2) and gyroscope connection point (4.3) are not used in the gyroscope system (4), instead there are gyroscope wheels (9) provided on the surface of the gyroscope mass (4.1) corresponding to the seat part (2.1) of the vehicle seat (2) and contacting the seat part (2.1) from at least one point and at least one gyroscope rail channel (10) provided on the base of the seat part (2.1) corresponding to the gyroscope mass (4.1) and determining the route at which the gyroscope wheels (9) can enter and move therein.

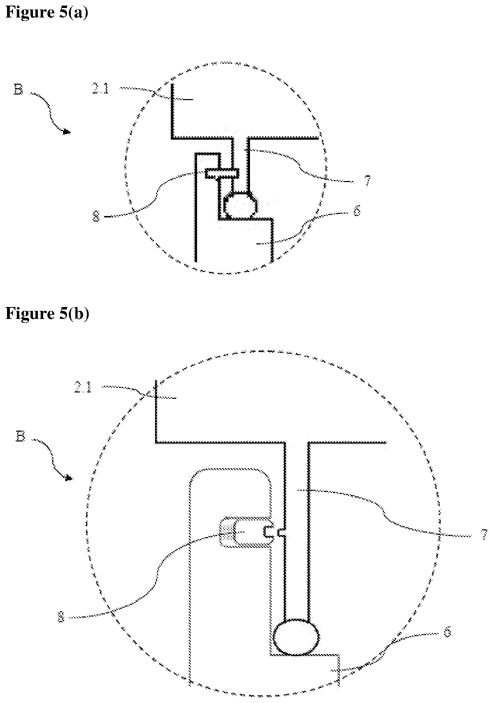

In the preferred embodiment of the invention, in case the user wants to deactivate the gyroscope system (4), at least one lock pin (8) extends towards the limiting extension (7) from the limiting frame (6), and enables the limiting extension (7) and thus the vehicle seat (2) to which it is connected to be fixed to the limiting frame (6) and the vehicle floor (T). In order to perform attachment process expressed herein, the said lock pin (8) enters into an opening (Figure 5(a)) provided on the limiting extension (7) and its movement is prevented or it enables the limiting extension (7) to be grabbed and stuck by means of a gripper it has. After locking, the vehicle seat (2) is used as a conventional seat. In the preferred embodiment of the invention, the end of the lock pin (8) located inside a slot on the surface of the limiting frame (6) close to the limiting extension (7) close to the limiting extension (7) has a C shaped cross-section, upon activation by the user via a button on the vehicle (preferably by pushing via the springs between the end of the lock pin (8) corresponding to inside of the slot and the slot), it extends towards the limiting extension (7) and it grabs the protrusion by a protrusion on the limiting extension (7) entering into the opening of the C shaped cross section end, and thus it enables the limiting extension to be held (Figure 5(b)).

In the preferred embodiment of the invention, the limiting extension (7) is manufactured from rubber, plastic, magnetic or an equivalent material.

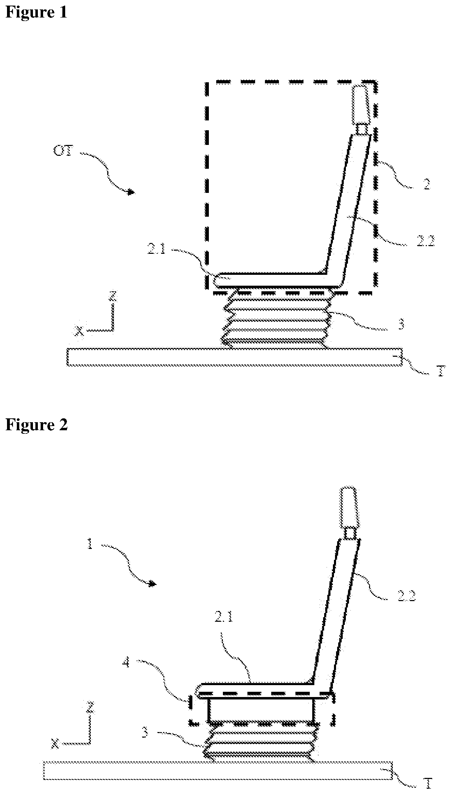

In the embodiments known in the technique, the seat is integrated to the vehicle floor (T) and directly transfers the shocks and vibrations occurring due to effects on the rod on which the vehicle is running to the person sitting on the seat (Figure 1). In the inventive gyroscopic vehicle seat structure (1), the vehicle seat (2) is not directly associated with the vehicle floor (T), but it is associated with the vehicle floor (T) through a gyroscope system (4). The gyroscope system (4) can remain vertical to the gravitational axis in balance depending on the principle of conservation of angular momentum with the high speed rotation of the gyroscope mass (4.1) which it has according to the operational logic of the gyroscope. The gyroscope mass (4.1) remaining in balance in such way is associated with the vehicle seat (2). The association of the gyroscope mass (4.1) with the vehicle seat (2) is provided via gyroscope connection points (4.3) in form of a freely rotating balls inside holes on the gyroscope slot (4.2) in case a gyroscope slot (4.2) accommodating gyroscope mass (4.1) therein is used, or it is provided by contact through the gyroscope wheels (9) located on the gyroscope mass (4.1) in case gyroscope slot (4.2) is not used.

Their locations are significant since gyroscope system (4) provides effect in opposite direction of inclination (the vehicle seat (2) applying force on the vehicle floor (T)) in order to enable the vehicle seat (2) to be stabilized. In order that no permanent shape changes (plastic strain) are experienced in seat connections under these forces, the main connection of the gyroscope system (4) (gyroscope connection end (11), gyroscope slot (4.2)) should be attached to strong regions where gyroscope system (4) is connected to seat frame and has sufficient resistance. It is important that these connections have sufficient resistance during rotation of gyroscope mass (4.1) and transferring response to the vehicle seat (4.1).

The inventive gyroscopic vehicle seat structure (1) is comprised of the combination of a current seat design and gyroscope system (4), and it aims to receive all kinds of vibrations in the seat and to keep the seat independent from all rolling movements. In the region between the vehicle seats (2) and the vehicle floor (T), there is provided the seat lower frame (3) which is a structure accommodating the metal components (also pneumatic or spring systems depending on seat type) providing connection of the vehicle seat (2) to the vehicle floor (T). Pneumatic or spring systems depending on the seat type are also included in inner volume of the seat lower frame (3) present in the current embodiments and providing support for the inventive vehicle seat (2). Furthermore, the seat lower frame (3) provides support for all components and mechanism within the scope of the invention, and functions as housing/casing for all of these. A gyroscope system (4) included in the said seat lower frame (3) enables the vibrations, rolling and pitching movements of the vehicle seat (2) desired to be realized within the scope of the invention occurring due to inclinations on the road not to be reflected on the user. By utilizing the principle of conservation of angular momentum of the gyroscope, which is the logic on which the invention is based, the vibrations occurring due to bumps of the road on which the vehicle is moving, and the vehicle seat (2) can remain stabilized. In operational logic of the gyroscope, due to the high speed of gyroscope weight rotation at the axis of a shaft passing through the center of the gyroscope, this weight can remain vertical to gravitational axis in a balanced way without falling and maintained as long as the rapid rotation is continued. Within the scope of the invention, circular plates made of a heavy metal are used as gyroscope masses (4.1), which are positioned parallel to the seat part (2.1), corresponding to below the seat part (2) to provide gyroscope application. The gyroscope masses (4.1) can be an assembly comprising one or a plurality of plates, and they can rotate both clockwise and counter clockwise. In order to attach the gyroscope slot (4.2) to the seat lower frame (3), at least two gyroscope connection ends (11) extend towards the seat lower frame (3) from the gyroscope slot (4.2). The end of the gyroscope connection end (11) extending towards the seat lower frame (3) is connected to the point (5) which is a part of seat lower frame (3) area, and it can move around its own axis. The connection of the gyroscope slot (4.2) with the seat part (2.1) is provided via welding or a bolt. The inventive gyroscopic vehicle seat structure (1), which provides increased driving comfort (reducing vibrations and allowing the vehicle seat (2) to remain in a flat/balanced position), operates at a certain angle range to avoid user discomfort. The limiting elements (limiting frame (6) and limiting extension (7)) are used within the scope of the invention for both this purpose and for activation during instantaneous accelerations of the vehicle. The limiting extension (7) which is located at a close distance from the inner surface of the limiting frame (6) extending from the vehicle floor (T) to the vehicle seat (2) ensures that the oscillation movement of the vehicle seat (2) to which it is attached is kept at a certain range with the gyroscope system (4). Thereby, it is provided to create the motion share required for balancing (oscillation dampening) the vehicle seat (2) associated with the gyroscope system (4) and the gyroscope system (4) depending on the slope of the road. The limiting extension (7) is made of rubber, plastic, spring, suspension, magnetic or equivalent material/system in order to ensure that the seat oscillation motion is terminated by a softer transition and to prevent noise generation. The stabilizing effect of the particular gyroscope system (4) is prevented from affecting the vehicle seat (2) by securing a locking pin (8) extending from the limiting frame (6) to the limiting extension (7), limiting extension (7) and vehicle seat (2). The user causes the lock pin (8) to enable locking or unlocking with a button located in the vehicle (such as under the dashboard, under the seat) so that the gyroscope system (4) can be activated or deactivated in control of the user. By the user pushing the button to disable the gyroscope system (4), the lock pin (8) secures the limiting extension (7) to allow the vehicle seat (2) to function as a standard seat.

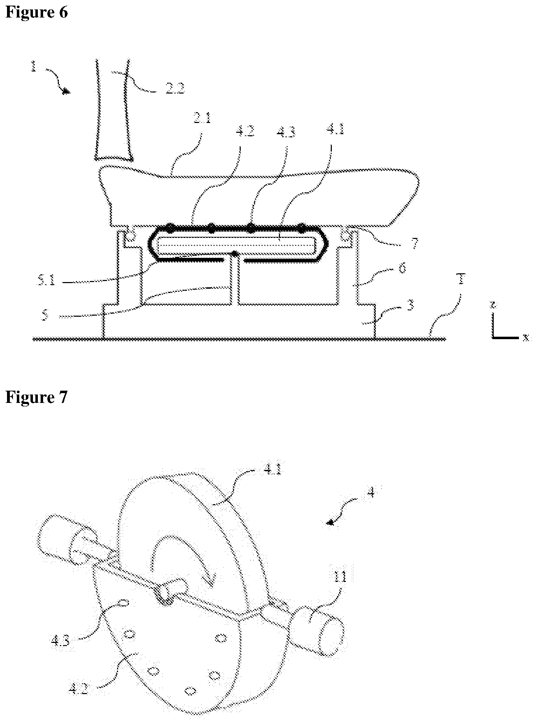

At least one control unit, in accordance with the data received from a sensor for detecting the inclination changes on the road on which the vehicle is moving, enables the activation of the electric motor which rotates the gyroscope mass (4.1) in case of need, and the activation of the gyroscope system (4). By means of the sensor, the gyroscope system (4) is activated depending on the change on its X and Y (horizontal) plane, and enables the seat to remain horizontal. If the vehicle is described as longitudinal X-direction and lateral Y-direction (directional indication in FIG. 6), the vehicle seat (2) will perform rolling and pitching movements, especially around the X and Y axes. One of the main duties of gyroscope system (4) is to avoid these movements.

By means of the gyroscope masses (4.1) rotating in different directions, the rotation of the seat in Z axis (vertical) is prevented. If the gyroscope mass (4.1) rotates towards single point, it will generate a momentum force. If gyroscope mass (4.1) consists of two concentric parts and they turn in the opposite direction, they will not create any moment; the moments in the opposite direction that each part creates will dampen each other. While the gyroscope system (4) is active, there is no need for a different vibration dampening mechanism and the balance state obtained by the operation of the gyroscope system (4) is always sufficient. In a situation where the gyroscope system (4) is disabled - the user is able to switch to this state by pressing a button - the sensors can detect the amount of unbalance and enable the gyroscope system (4) to be engaged and ensure that the balance is achieved at that moment. The rotation of the gyroscope mass (4.1) is carried out by means of an electric motor and the gyroscope system (4) can be deactivated by stopping the electric motor when it is desired, and thus the vehicle seat (2) can switch to normal seat function.

## Claims

1. A gyroscopic vehicle seat structure (1), which prevents the driver/passenger sitting on the seat from being affected by vibrations from the road, rolling and pitching movements by integrating gyroscope application, **comprising**
- at least one vehicle seat (2) which is comprised of a seat part (2.1) on which the passenger/driver sits, and a back part (2.2) on which he leans his back,
- at least one seat lower frame (3) which is fixed to the vehicle floor (T) and disposed between the seat part (2.1) of the vehicle seat (2) and the vehicle floor (T) on which it is placed, which has a cross sectional area almost with the same width as the seat part (2.1) of the vehicle seat (2), and which is in form of a box having an inner volume accommodating mechanical components that provide the connection of the vehicle seat (2) to the vehicle floor (T) and pneumatic or spring systems depending on the seat type, and **characterized by**
- at least one gyroscope system (4) which is situated between the seat part (2.1) of the vehicle seat (2) and the seat lower frame (3) and close to the seat part (2.1), and which comprises
∘ at least one gyroscope mass (4.1) which is manufactured from a heavy material in order to be used in gyroscope application, which is in form of a circular plate and which can rotate around an axis passing through the center of a circle upon the operation of a motor to which it is connected, and which is positioned parallel to the floor of the seat part (2.1),
and which enables to perform angular balancing with constant fast rotation of the gyroscope mass (4.1), and also enables the gyroscope mass (4.1) and the vehicle seat (2) it is associated with to remain in balance independent from the inclination of the road on which the vehicle is moving,
- at least one contact shaft (5) which is fixed to the inner volume of the seat lower frame (3) corresponding to the vehicle floor (T) from its one end, and which extends towards the point of where the rotational axis of the gyroscope mass (4.1) passes, and which has at least one contact ball (5.1) which can rotate freely and is located where it contacts the gyroscope mass (4.1) in order to keep the gyroscope mass (4.1) at a certain distance far from the vehicle floor (T) without preventing its rotation,
- at least one limiting frame (6) which is fixed to the floor of the seat lower frame (3) therein, and extends towards the seat part (2.1) from the vehicle floor (T) such that it will remain inside the gyroscope system (4), and the end of which close to the seat part (2.1) has a cross-section in form of L facing the hollow inner volume it forms,
- at least one limiting extension (7) which extends towards the limiting frame (6) from the seat part (2.1) of the vehicle seat (2), which is placed close to the L shaped end of the limiting frame (6) such that it will not contact, and which provides limiting by contacting the vertical and horizontal surfaces of the L shaped end of the limiting frame (6) during oscillation of vehicle seat (2) during stabilizing with the effect of gyroscope system (4).

2. A gyroscopic vehicle seat structure (1) according to claim 1, **characterized by** gyroscope mass (4.1) which is comprised of two or more separable circular plates in order to be adjusted to different weight according to different requirements.

3. A gyroscopic vehicle seat structure (1) according to claim 1 or 2, **characterized by** gyroscope system (4) which has at least one gyroscope slot (4.2) in which the gyroscope mass (4.1) is positioned and which has an inner volume in which it can rotate freely without contacting its walls.

4. A gyroscopic vehicle seat structure (1) according to claim 3, **characterized by** gyroscope system (4) which comprises at least one gyroscope connection point (4.3) which enables the distance between them to be maintained and to keep the inclination of the seat part (2.1) same as the inclination of the gyroscope slot (4.2) by the gyroscope slot (4.2) contacting the seat part (2.1), and which has rotatable balls placed inside the holes on the surface of the gyroscope slot (4.2) corresponding to the seat part (2.1).

5. A gyroscopic vehicle seat structure (1) according to claim 1 or 2, **characterized by** gyroscope system (4) which has gyroscope wheels (9) provided on the surface of the gyroscope mass (4.1) corresponding to the seat part (2.1) of the vehicle seat (2) and contacting the seat part (2.1) from at least one point, and at least one gyroscope rail channel (10) provided on the base of the seat part (2.1) corresponding to the gyroscope mass (4.1) and determining the route at which the gyroscope wheels (9) can enter and move therein.

6. A gyroscopic vehicle seat structure (1) according to claim 1, **characterized by** at least one lock pin (8) which enables the limiting extension (7) and thus the vehicle seat (2) to which it is connected to be fixed to the limiting frame (6) and the vehicle floor (T) by extending from the limiting frame (6) towards the limiting extension (7) in order to deactivate the gyroscope system (4).

7. A gyroscopic vehicle seat structure (1) according to claim 6, **characterized by** lock pin (8) which prevents the movement by entering into an opening provided on the limiting extension (7).

8. A gyroscopic vehicle seat structure (1) according to claim 6, **characterized by** lock pin (8) which enables the limiting extension (7) to be grabbed and stuck by means of the gripper it has.

9. A gyroscopic vehicle seat structure (1) according to claim 8, **characterized by** lock pin (8) which is positioned inside a slot on the surface of the limiting frame (6) close to the limiting extension (7), the end of which close to the limiting extension (7) has a C shaped cross section, and which extends towards the limiting extension (7) and grabs the protrusion by a protrusion on the limiting extension (7) entering into the opening of its C shaped cross section end, and thus enabling it to be held upon activation by the user via a button on the vehicle.

10. A gyroscopic vehicle seat structure (1) according to claim 1, **characterized by** limiting extension (7) which is manufactured from rubber, plastic, magnetic or equivalent material.

11. A gyroscopic vehicle seat structure (1) according to claim 1, **characterized by** at least one control unit which enables the gyroscope system (4) to be activated by operating the electric motor enabling the gyroscope mass (4.1) to rotate if required in accordance with the data it receives from a sensor which enables the inclination changes on the road on which the vehicle is running to be detected.

## Patentansprüche

1. Gyroskopische Fahrzeugsitzstruktur (1), welche verhindert, dass der auf dem Sitz sitzende Fahrer/Passagier durch Vibrationen von dem Weg, Roll- und Nickbewegungen durch die Integration der Gyroskop-Anwendung beeinflusst wird, **umfassend**
- mindestens einen Fahrzeugsitz (2), der aus einem Sitzteil (2.1) besteht, auf dem der Passagier/Fahrer sitzt, und einem Rückenteil (2.2), auf dem er sich mit dem Rücken lehnt,
- mindestens einen Sitzunterrahmen (3), welcher am Fahrzeugboden (T) befestigt ist und zwischen dem Sitzeimer (2.1) des Fahrzeugsitzes (2) und dem Fahrzeugboden (T), auf dem er positioniert ist, angeordnet ist, welcher einen Querschnittsbereich etwa mit der gleichen Breite aufweist als Sitzteil (2.1) des Fahrzeugsitzes (2), und welcher in Form eines Kastens mit einem Innenvolumen zur Aufnahme mechanischer Komponenten, die die Verbindung des Fahrzeugsitzes (2) mit dem Fahrzeugboden (T) und je nach Sitztyp Pneumatik- oder Federsysteme bereitstellen, ist, und **gekennzeichnet durch**
- mindestens ein Gyroskop-System (4), welches zwischen dem Sitzteil (2.1) des Fahrzeugsitzes (2) und dem Sitzunterrahmen (3) und nahe dem Sitzteil (2.1) angeordnet ist, und welches umfasst
∘ mindestens eine Gyroskop-Masse (4.1), welche aus einem schweren Material hergestellt ist, um in Gyroskop-Anwendungen verwendet zu werden, welche in Form einer kreisförmigen Platte ist und welche sich bei Betätigung eines Motors, mit dem sie verbunden ist, um eine durch den Mittelpunkt eines Kreises verlaufende Achse drehen kann und welche parallel zum Boden des Sitzteils (2.1) positioniert ist,
und welches ermöglicht es, einen Winkelausgleich mit konstanter schneller Drehung der Gyroskop-Masse (4.1) durchzuführen, und ermöglicht auch die Gyroskop-Masse (4.1) und den damit verbundenen Fahrzeugsitz (2) es, unabhängig von der Neigung des Wegs, auf der sich das Fahrzeug bewegt, im Gleichgewicht zu bleiben,
- mindestens eine Kontaktwelle (5), welche mit seinem einen Ende am Innenvolumen des Sitzunterrahmens (3) entsprechend dem Fahrzeugboden (T) befestigt ist, und welche sich in Richtung des Durchgangspunkts der Drehachse der Gyroskop-Masse (4.1) erstreckt, und welche mindestens eine frei drehbare Kontaktkugel (5.1) aufweist, die sich dort befindet, wo sie die Gyroskop-Masse (4.1) kontaktiert, um die Gyroskop-Masse (4.1) in einem gewissen Abstand vom Fahrzeugboden (T) zu halten, ohne deren Drehung zu verhindern,
- mindestens einen begrenzenden Rahmen (6), der am Boden des darin befindlichen Sitzunterrahmens (3) befestigt ist und sich vom Fahrzeugboden (T) zum Sitzteil (2.1) derart erstreckt, dass er innerhalb des Gyroskop-Systems (4) verbleiben wird, und dessen Ende, der nahe dem Sitzteil (2.1) ist, einen Querschnitt in L-Form aufweist, der dem hohlen Innenvolumen, das er bildet, zugewandt ist,
- mindestens eine begrenzende Extension (7), die sich vom Sitzteil (2.1) des Fahrzeugsitzes (2) zum begrenzenden Rahmen (6) erstreckt, die in der Nähe des L-förmigen Endes des begrenzenden Rahmens (6) so angeordnet ist, dass sie nicht kontaktieren wird, und die eine Begrenzung durch Kontakt der vertikalen und horizontalen Oberflächen des L-förmigen Endes des begrenzenden Rahmens (6) während der Schwingung des Fahrzeugsitzes (2) während der Stabilisierung mit der Wirkung des Gyroskop-Systems (4) bereitstellt.

2. Gyroskopische Fahrzeugsitzstruktur (1) nach Anspruch 1, **gekennzeichnet durch** die Gyroskop-Masse (4.1), die aus zwei oder mehr trennbaren kreisförmigen Platten besteht, um nach unterschiedlichen Anforderungen auf unterschiedliche Gewichte eingestellt zu werden.

3. Gyroskopische Fahrzeugsitzstruktur (1) nach Anspruch 1 oder 2, **gekennzeichnet durch** das Gyroskop-System (4), das mindestens einen Gyroskop-Schlitz (4.2) aufweist, in dem die Gyroskop-Masse (4.1) positioniert ist und das ein Innenvolumen aufweist, in dem es sich frei drehen kann, ohne seine Wände zu kontaktieren.

4. Gyroskopische Fahrzeugsitzstruktur (1) nach Anspruch 3, **gekennzeichnet durch** das Gyroskop-System (4), das mindestens eine Gyroskop-Verbindungsstelle (4.3) umfasst, die es ermöglicht, den Abstand zwischen denen einzuhalten und die Neigung des Sitzteils (2.1) gleich der Neigung des Gyroskop-Schlitzes (4.2) durch den Gyroskop-Schlitz (4.2), der das Sitzteil (2.1) kontaktiert, zu halten, und das drehbare Kugeln aufweist, die innerhalb der Löcher auf der Oberfläche des Gyroskop-Schlitzes (4.2) entsprechend dem Sitzteil (2.1) angeordnet sind.

5. Gyroskopische Fahrzeugsitzstruktur (1) nach Anspruch 1 oder 2, **gekennzeichnet durch** das Gyroskop-System (4), das Gyroskop-räder (9) aufweist, die an der Oberfläche der Gyroskop-Masse (4.1) entsprechend dem Sitzteil (2.1) des Fahrzeugsitzes (2) vorgesehen sind und das Sitzteil (2.1) von mindestens einer Stelle kontaktieren, und mindestens einen Gyroskop-Schienenkanal (10), der an der Basis des Sitzteils (2.1) entsprechend der Gyroskop-Masse (4.1) vorgesehen ist und den Weg bestimmt, auf dem die Gyroskop-räder (9) hineinfahren und sich darin bewegen können.

6. Gyroskopische Fahrzeugsitzstruktur (1) nach Anspruch 1, **gekennzeichnet durch** mindestens einen Sicherungsstift (8), der es ermöglicht, die begrenzende Extension (7) und damit den Fahrzeugsitz (2), mit dem er verbunden ist, durch die Extension vom begrenzenden Rahmen (6) in Richtung der begrenzenden Extension (7) am begrenzenden Rahmen (6) und am Fahrzeugboden (T) zu befestigen, um das Gyroskop-System (4) zu deaktivieren.

7. Gyroskopische Falirzeugsitzstruktur (1) nach Anspruch 6, **gekennzeichnet durch** Sicherungsstift (8), der die Bewegung durch Eintritt in eine an der begrenzenden Extension (7) vorgesehene Öffnung verhindert.

8. Gyroskopische Fahrzeugsitzstruktur (1) nach Anspruch 6, **gekennzeichnet durch** Sicherungsstift (8), der die zu greifende und zu festklemmende begrenzende Extension (7) mittels Greifers, den der aufweist, ermöglicht.

9. Gyroskopische Fahrzeugsitzstruktur (1) nach Anspruch 8, **gekennzeichnet durch** Sicherungsstift (8), der in einem Schlitz an der Oberfläche des begrenzenden Rahmens (6) nahe der begrenzenden Extension (7) positioniert ist, dessen Ende nahe der begrenzenden Extension (7) einen C-förmigen Querschnitt aufweist, und der sich in Richtung der begrenzenden Extension (7) erstreckt und den Vorsprung durch einen Vorsprung an der begrenzenden Extension (7) greift, der in die Öffnung seines C-förmigen Querschnittsendes eintritt, und damit ein Halten bei Aktivierung durch den Nutzer über eine Taste am Fahrzeug ermöglicht.

10. Gyroskopische Fahrzeugsitzstruktur (1) nach Anspruch 1, **gekennzeichnet durch** begrenzende Extension (7) aus Gummi, Kunststoff, Magnet oder gleichwertigem Material.

11. Gyroskopische Fahrzeugsitzstruktur (1) nach Anspruch 1, **gekennzeichnet durch** mindestens eine Steuereinheit, die die Aktivierung des Gyroskop-Systems (4) durch Betätigung des Elektromotors, der es der Gyroskop-Masse (4.1) ermöglicht, sich bei Bedarf entsprechend den von einem Sensor empfangenen Daten zu drehen, der es ermöglicht, die Neigungversänderungen auf dem Weg, auf der das Fahrzeug fährt, zu erfassen.

## Revendications

1. Structure de siège de véhicule gyroscopique (1), qui empêche le conducteur/passager assis sur le siège d'être affecté par les vibrations de la route, les mouvements de roulement et de tangage en intégrant l'application d'un gyroscope, **comprenant**
- au moins un siège de véhicule (2) qui est composé d'une partie siège (2.1) sur laquelle le passager/conducteur s'assoit, et d'une partie dossier (2.2) sur laquelle il appuie son dos,
- au moins un cadre inférieur de siège (3) fixé au plancher du véhicule (T) et disposé entre la partie de siège (2.1) du siège de véhicule (2) et le plancher du véhicule (T) sur lequel il est placé, qui présente une section transversale ayant presque la même largeur que la partie de siège (2.1) du siège de véhicule (2), et qui se présente sous la forme d'une boîte ayant un volume intérieur logeant des composants mécaniques qui assurent la liaison du siège de véhicule (2) avec le plancher du véhicule (T) et des systèmes pneumatiques ou à ressort selon le type de siège, et **caractérisée par**
- au moins un système du gyroscope (4) qui est situé entre la partie de siège (2.1) du siège de véhicule (2) et le cadre inférieur de siège (3) et à proximité de la partie de siège (2.1), et qui comprend
∘ au moins une masse du gyroscope (4.1) qui est fabriquée à partir d'un matériau lourd afin d'être utilisée dans une application du gyroscope, qui a la forme d'un plateau circulaire et qui peut tourner autour d'un axe passant par le centre d'un cercle sous l'action d'un moteur auquel il est connecté, et qui est positionné parallèlement au plancher de la partie siège (2.1),
et qui permet d'effectuer un équilibrage angulaire avec une rotation rapide constante de la masse du gyroscope (4.1), et qui permet également à la masse du gyroscope (4.1) et le siège de véhicule (2) auquel il est associé à rester en équilibre indépendamment de l'inclinaison de la route sur laquelle le véhicule se déplace,
- au moins un arbre de contact (5) qui est fixé au volume intérieur du cadre inférieur de siège (3) correspondant au plancher du véhicule (T) à partir de sa première extrémité, et qui s'étend vers le point où passe l'axe de rotation de la masse du gyroscope (4.1), et qui a au moins une bille de contact (5.1) qui peut tourner librement et est située à l'endroit où elle entre en contact avec la masse du gyroscope (4.1) afin de maintenir la masse du gyroscope (4.1) à une certaine distance du plancher du véhicule (T) sans empêcher sa rotation,
- au moins un cadre de limitation (6) qui est fixé au plancher du cadre inférieur de siège (3) à l'intérieur, et s'étend vers la partie du siège (2.1) à partir du plancher du véhicule (T) de telle sorte qu'il reste à l'intérieur du système du gyroscope (4), et dont l'extrémité proche de la partie siège (2.1) présente une section transversale en forme de L tournée vers le volume intérieur creux qu'elle forme,
- au moins une extension de limitation (7) qui s'étend vers le cadre de limitation (6) à partir de la partie de siège (2.1) du siège de véhicule (2), qui est placée près de l'extrémité en forme de L du cadre de limitation (6) de manière à ne pas entrer en contact, et qui assure la limitation par contact des surfaces verticales et horizontales de l'extrémité en forme de L du cadre de limitation (6) pendant l'oscillation du siège de véhicule (2) pendant la stabilisation avec l'effet du système du gyroscope (4).

2. Structure de siège de véhicule gyroscopique (1) selon la revendication 1, **caractérisée par** la masse du gyroscope (4.1) qui est composée de deux ou plusieurs plaques circulaires séparables afin d'être ajustée à des poids différents selon les besoins.

3. Structure de siège de véhicule gyroscopique (1) selon la revendication 1 ou 2, **caractérisée par** le système du gyroscope (4) qui a au moins une fente du gyroscope (4.2) dans laquelle la masse du gyroscope (4.1) est positionnée et qui a un volume intérieur dans lequel elle peut tourner librement sans entrer en contact avec ses parois.

4. Structure de siège de véhicule gyroscopique (1) selon la revendication 3, **caractérisée par** le système du gyroscope (4) qui comprend au moins un point de connexion du gyroscope (4.3) qui permet de maintenir la distance entre eux et de garder l'inclinaison de la partie de siège (2.1) identique à l'inclinaison de la fente du gyroscope (4.2) par la fente du gyroscope (4.2) en contact avec la partie siège (2.1). et qui a des billes rotatives placées à l'intérieur des trous sur la surface de la fente du gyroscope (4.2) correspondant à la partie siège (2.1).

5. Structure de siège de véhicule gyroscopique (1) selon la revendication 1 ou 2, **caractérisée par** le système du gyroscope (4) qui a des roues du gyroscope (9) prévues sur la surface de la masse du gyroscope (4.1) correspondant à la partie de siège (2.1) du siège de véhicule (2) et entrant en contact avec la partie de siège (2.1) depuis au moins un point, et au moins un canal de rail du gyroscope (10) prévu sur la base de la partie de siège (2.1) correspondant à la masse du gyroscope (4.1) et déterminer le trajet auquel les roues du gyroscope (9) peuvent entrer et se déplacer dans celui-ci.

6. Structure de siège de véhicule gyroscopique (1) selon la revendication 1, **caractérisée par** au moins une goupille de verrouillage (8) qui pennet de fixer l'extension de limitation (7) et donc le siège de véhicule (2) auquel elle est connectée au cadre de limitation (6) et au plancher du véhicule (T) en s'étendant du cadre de limitation (6) vers l'extension de limitation (7) afin de désactiver le système du gyroscope (4).

7. Structure de siège de véhicule gyroscopique (1) selon la revendication 6, **caractérisée par** la goupille de verrouillage (8) qui empêche le mouvement en pénétrant dans une ouverture prévue sur l'extension de limitation (7).

8. Structure de siège de véhicule gyroscopique (1) selon la revendication 6, **caractérisée par** la goupille de verrouillage (8) qui permet de saisir et de bloquer l'extension de limitation (7) au moyen de la pince qu'elle comporte.

9. Structure de siège de véhicule gyroscopique (1) selon la revendication 8, **caractérisée par** la goupille de verrouillage (8) qui est positionnée à l'intérieur d'une fente sur la surface du cadre de limitation (6) près de l'extension de limitation (7), dont l'extrémité près de l'extension de limitation (7) a une section transversale en forme de C, et qui s'étend vers l'extension de limitation (7) et saisit la saillie par une saillie sur l'extension de limitation (7) entrant dans l'ouverture de son extrémité de section transversale en forme de C, et permettant ainsi de la maintenir lors de l'activation par l'utilisateur via un bouton sur le véhicule.

10. Structure de siège de véhicule gyroscopique (1) selon la revendication 1, **caractérisée par** l'extension de limitation (7) qui est fabriquée en caoutchouc, en plastique, en matériau magnétique ou équivalent.

11. Structure de siège de véhicule gyroscopique (1) selon la revendication 1, **caractérisée par** au moins une unité de commande qui permet d'activer le système du gyroscope (4) en actionnant le moteur électrique permettant à la masse du gyroscope (4.1) de tourner si nécessaire en fonction des données qu'elle reçoit d'un capteur qui permet de détecter les changements d'inclinaison de la route sur laquelle le véhicule roule.
